# EUROPÄISCHE PATENTSCHRIFT

(11) **EP 1 585 977 B1**
(45) Veröffentlichungstag und Bekanntmachung des Hinweises auf die Patenterteilung: **30.12.2009**
(21) Anmeldenummer: 04702659.6
(22) Anmeldetag: 16.01.2004
(51) Int. Cl.: G01N 21/53

(54) **SENSOR ZUR DETEKTION VON NEBELARTIGEN MEDIEN**
SENSOR FOR DETECTING FOG-LIKE MEDIA
CAPTEUR POUR DETECTER DES SUBSTANCES SOUS FORME DE BROUILLARD

(30) Priorität: 25.01.2003 DE 10302970
(43) Veröffentlichungstag der Anmeldung: 19.10.2005
(73) Patentinhaber: Valeo Schalter und Sensoren GmbH, 74321 Bietigheim-Bissingen (DE)
(72) Erfinder: BAYHA, Heiner, 71665 Vaihingen (DE); NIES, Jürgen, 75181 Pforzheim (DE); SCHULER, Thomas, 75446 Wiernsheim (DE)
(74) Vertreter: Bulling, Alexander
(86) Internationale Anmeldenummer: PCT/EP2004/000290
(87) Internationale Veröffentlichungsnummer: WO 2004/068122

(56) Entgegenhaltungen:
- DE-A- 19 629 712
- FR-A- 2 584 497
- GB-A- 1 227 187
- US-A- 3 758 211
- US-A- 4 659 922
- US-A- 5 254 853

## Beschreibung

Die Erfindung betrifft einen Sensor zur Detektion von nebelartigen Medien. Unter nebelartigen Medien werden beispielsweise verstanden Nebel, Dunst, Dampf, Rauch oder dergleichen. Die Erfindung betrifft außerdem ein Verfahren zur Detektion von solchen nebelartigen Medien.

Derartige Sensoren und Verfahren können insbesondere in der Kraftfahrzeugtechnik Verwendung finden, wo sie den Sicherheitsstandard von Fahrzeugen erhöhen. Die Sensoren und Verfahren können beispielsweise zur automatischen Ein- und Ausschaltung beziehungsweise Kontrolle der Nebelbeleuchtung eines Fahrzeuges, für die Generierung von Warnhinweisen an den Fahrzeuglenker oder für eine automatische Geschwindigkeitsanpassung an die jeweiligen Witterungsbedingungen verwendet werden.

Die Detektion von nebelartigen Medien ist problematisch, da es sich bei diesen Medien in der Regel um räumlich teildurchleuchtbare Gebilde handelt.

Aus der DE 196 29 712 A1 ist Verfahren zur Sichtweitenmessung bekannt geworden, bei dem unter Berücksichtigung eines aus zwei Rückstreulicht-Ergebissen gebildeten Differenzsignals auf die jeweilige Sichtweite rückgeschlossen wird.

Aus der US 5,254,853 bzw. der DE 40 04 529 A1 ist ein Lichttaster mit einer Hintergrundsausblendung zum Registrieren von Personen bzw. zur Überwachung von Türen bekannt geworden.

Der vorliegenden Erfindung liegt die Aufgabe zugrunde, einen Sensor bereitzustellen, der zur Detektion von nebelartigen Medien geeignet ist.

Zur Lösung dieser Aufgabe wird ein Sensor mit den Merkmalen des Anspruchs 1 oder des Anspruchs 2 vorgeschlagen.

Da bei den erfindungsgemäßen Sensoren wenigstens an zwei unterschiedlichen Positionen geprüft wird, ob ausgesendete Signale an dem nebelartigen Medium reflektiert werden, kann festgestellt werden, ob nebelartige Medien vorhanden sind. Bei Vorhandensein von nebelartigen Medien tritt eine Reflexion im Raum auf. Sind keine Medien vorhanden, so findet keine Reflexion statt. Ist ein massiver, nicht räumlich durchleuchtbarer Gegenstand vorhanden, so findet in der Regel keine Reflexion an den erfassten Positionen statt. Die Oberfläche eines nicht durchleuchtbaren Gegenstandes befindet sich weder an der einen Position noch an der anderen Position. Wenn überhaupt, werden, je nach Lage des Gegenstandes, die ausgesendeten Signale entweder an der einen oder an der anderen Position reflektiert. Ein Reflektieren an beiden Positionen findet hierbei nicht statt.

Die erfindungsgemäßen Sensoren sind folglich dazu geeignet, nebelartige Medien auf einfache Art und Weise zu detektieren.

Dabei umfassen die erfindungsgemäßen Sensoren eine Optik, die die auszusendenden beziehungsweise zu empfangenden Signale entlang jeweils eines vorzugsweise weitgehend zylindrischen oder linienartigen Strahles entlang der jeweiligen Sendeachse beziehungsweise Empfängerachse bündelt. Dies hat den Vorteil, dass die Positionen, an denen sich die Achsen kreuzen, ein relativ kleines Volumen erfassen und damit eine relativ genaue Messung zulassen.

Der Sensor ist zur Anbringung an eine Scheibe, insbesondere an die Windschutzscheibe eines Fahrzeuges, geeignet. Um einen möglichst geringen Signalverlust zu erreichen, ist vorgesehen, dass zwischen der Optik und der Scheibe ein Kopplungsmittel vorgesehen ist. Um einen kompakt bauenden Sensor zu erhalten, ist erfindungsgemäß vorgesehen sein, dass der wenigstens eine Sender und/oder der wenigstens eine Empfänger auf einer Leiterplatine angeordnet sind. Außerdem kann vorteilhaft sein, auch die Auswerteeinheit auf dieser Leiterplatine unterzubringen.

Eine vorteilhafte Ausführungsform ergibt sich dann, wenn die beiden Sendeachsen oder die beiden Empfängerachsen wenigstens weitgehend parallel zueinander verlaufen. Es sollte vermieden werden, dass sich die jeweils beiden Empfängerachsen oder die jeweils beiden Sendeachsen im Raum kreuzen.

Ein vorteilhafter Sensor zeichnet sich dadurch aus, dass die Auswerteeinheit dazu geeignet ist, aufgrund eines Vergleichs der Intensität der auszusendenden Signale und der Intensität der zu empfangenden Signale die Dichte des zu detektierenden Mediums zu bestimmen. Aufgrund des Vergleichs der Intensitäten der gesendeten und empfangenden Signale kann auf die Qualität des Mediums rückgeschlossen werden. Bei dichtem Nebel ergibt sich eine andere Intensität der empfangenden Signale als bei weniger dichtem Nebel.

Ein vorteilhafter Sensor ergibt sich dann, wenn als Sender Infrarotsender und als Empfänger Infrarotempfänger vorgesehen werden.

Der erfindungsgemäße Sensor generiert vorteilhafterweise bei der Detektion von Nebel ein Signal zur Ansteuerung eines Systems. Ein solches System kann beispielsweise die Nebelbeleuchtung eines Fahrzeuges sein; das heißt, die Nebelbeleuchtung wird bei der Detektion von nebelartigen Medien automatisch aktiviert, beziehungsweise, wenn keine nebelartigen Medien mehr detektiert werden, deaktiviert. Außerdem kann beispielsweise ein Warnsignal an den Fahrzeuglenker optischer, akustischer oder taktiler Natur abgegeben werden, um ihn beispielsweise auf auftretenden Nebel aufmerksam zu machen.

Vorteilhaft ist, wenn der Sender beziehungsweise die Sender zeitversetzt und/oder abwechselnd Signale aussendet beziehungsweise aussenden. Hierdurch kann die Zuordnung der ausgesendeten zu den empfangenen Signalen ermöglicht werden.

Weitere vorteilhafte Einzelheiten und Ausführungen der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: eine schematische Ansicht eines ersten erfindungsgemäßen Sensors; und
- Figur 2: eine schematische Ansicht eines zweiten erfindungsgemäßen Sensors.

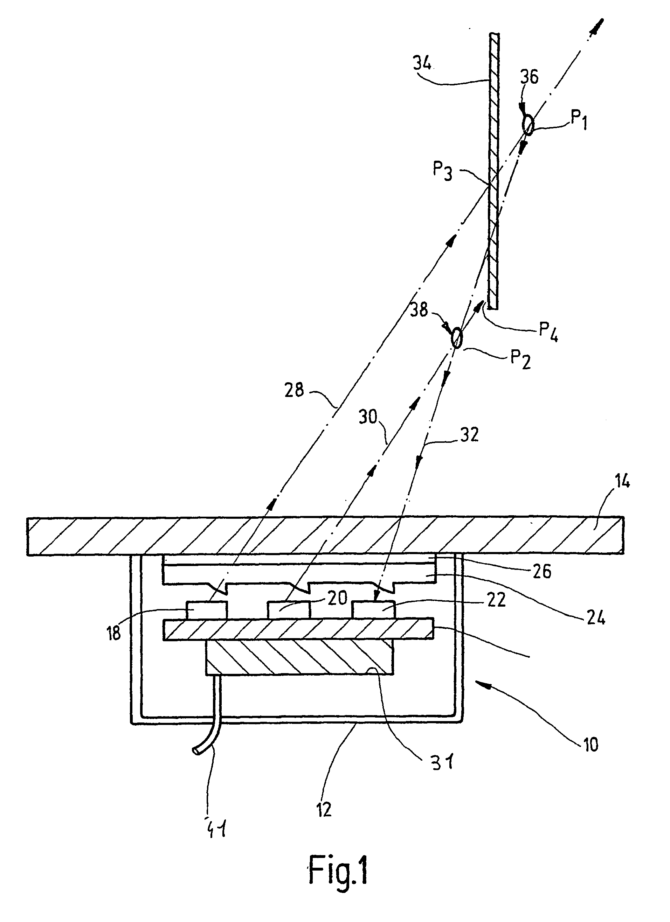

In der Figur 1 ist ein Sensor 10 zur Detektion von Nebel gezeigt, der mit einem Gehäuse 12 an der Innenseite einer Fahrzeugscheibe 14 angeordnet ist. Der Sensor 10 umfasst eine Platine 16, auf der zwei Sender 18, 20 und ein Empfänger 22 angeordnet sind. Auf der der Scheibe 14 zugewandten Seite weist der Sensor 10 eine Optik 24 und eine zwischen der Optik 24 und der Scheibe 14 liegende Kopplungsschicht 26 auf.

Die Optik 24 ist derart ausgebildet, dass die von den Sendern 18, 20 ausgesendeten Infrarotsignale entlang eines vorzugsweise weitgehend linienartigen Strahles 28, 30 gebündelt werden. Bei dem in der Figur dargestellten Sensors 10 sind die Strahlen 28, 30 mit ihren Strahlenachsen weitgehend identisch.

Durch die Optik 24 wird außerdem erreicht, dass die von dem Empfänger 22 zu empfangenden Signale auf einem weitgehend geradlinigen Strahl 32 liegen.

Wie aus der Figur 1 hervorgeht, verlaufen die beiden Strahlengänge 28, 30 parallel. Der Strahlengang 32 kreuzt die beiden Strahlengänge 28, 30 an zwei unterschiedlichen Positionen P₁ und P₂. Alle Strahlengänge 28, 30, 32 liegen also in einer Ebene.

Der Sensor 10 sieht ferner eine Auswerteeinheit 31 vor, die dann Nebel detektiert, wenn der Empfänger 22 von beiden Sendern 18, 20 ausgesendete Signale empfängt, die aufgrund von Nebelpartikeln 36, 38 in den Positionen P₁ und P₂ reflektiert werden. Aufgrund des Vorhandenseins von Nebelpartikeln im Raum findet die Reflexion nicht an einer definierten Grenzschicht statt, sondern im Raum verteilt, entlang der Sendeachsen 28, 30, unter anderem auch an den Positionen P₁ und P₂.

Befindet sich ein räumlich nicht durchleuchtbarer Körper, der in der Figur 1 mit der Bezugszahl 34 angedeutet ist, im Bereich des Sensors 10, so findet zwar eine Reflexion an diesem Körper 34 in den Punkten P₃ und P₄ statt. Da die Punkte P₃ und P₄ nicht auf der Empfängerachse 32 liegen, empfängt der Empfänger 22 keine Signale. Nur dann, wenn nebelartige Medien im Detektionsbereich des Sensors 10 vorhanden sind, werden von den Sendern 18, 20 ausgesendete Signale vom Empfänger 22 erfasst.

Vorteilhafterweise werden die von den Sendern 18, 20 gesendeten Signale zeitversetzt oder abwechselnd ausgesendet. Damit kann rückgeschlossen werden, ob die vom Empfänger 22 empfangenen Signale vom Sender 18 oder vom Sender 20 stammen.

Darüber hinaus können selbstverständlich mehr als zwei Sender und mehr als ein Empfänger in einem Sensor vorgesehen sein. Durch Vorsehen von mehreren unterschiedlichen Positionen von sich kreuzenden Strahlengängen kann eine sicherere und genauere Aussage über das Vorhandensein von Nebel im Detektionsbereich gemacht werden.

Vorteilhafterweise ist der Sensor 10 über Kommunikationsmittel 41 mit anderen Fahrzeugsystemen gekoppelt. Beispielsweise kann vorgesehen sein, dass die Nebelbeleuchtung des Fahrzeugs dann aktiviert wird, wenn der Nebelsensor 10 Nebel detektiert. Ebenso ist denkbar, dass bei Vorhandensein von Nebel Warnsignale an den Fahrzeuglenker gegeben werden.

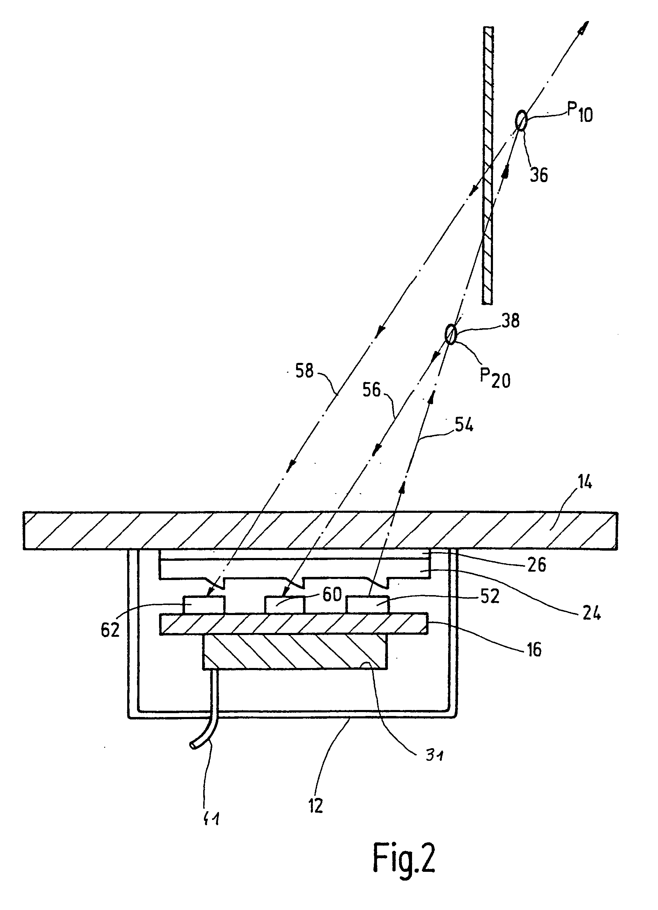

Der in der Figur 2 dargestellte Sensor 50 unterscheidet sich von dem Sensor 10 gemäß Figur 1 dadurch, dass von einem Sender 52 entlang einer Sendeachse 54 ausgesendete Signale zwei Empfängerachsen 56, 58 von zwei Empfängern 60, 62 in zwei unterschiedlichen Positionen P₁₀, P₂₀ kreuzen. Von dem Sender 52 ausgesendete Infrarotsignale werden von den beiden Empfängern 60, 62 nur dann erfasst, wenn nebelartige Medien im Detektionsbereich des Sensors 50 vorhanden sind.

Vorteilhafterweise kann mittels der Auswerteeinheit 31 die Intensität der gesendeten Signale mit der Intensität der empfangenen Signale verglichen werden. Daraus kann auf die Dichte des erfassten nebelartigen Mediums rückgeschlossen werden.

## Patentansprüche

1. Sensor (10) zur Detektion von nebelartigen Medien zur Anbringung an eine Scheibe (14), insbesondere eine Windschutzscheibe eines Fahrzeuges, mit zwei Sendern (18, 20) und einem Empfänger (22), wobei sich die Sendeachsen (28, 30) mit der Empfängerachse (32) an zwei unterschiedlichen Positionen (P1, P₂) kreuzen, und
mit einer Auswerteeinheit (31) die dann das Medium detektiert, wenn der Empfänger (22) von beiden Sendern (18, 20) ausgesendete Signal empfängt,
**dadurch gekennzeichnet, dass** die Sender (18, 20, 52), der Empfänger (22, 60, 62) und die Auswerteeinheit (31) gemeinsam auf einer Leiterplatine (16) angeordnet sind,
dass der Sensor auf der der Scheibe (14) zugewandten Seite eine Optik (24) umfasst, die die auszusendenden und zu empfangenden Signale entlang jeweils eines weitgehend zylindrischen oder linienartigen Strahles entlang der jeweiligen Sendeachse (28, 30, 54) und Empfängerachse (32, 56, 58) bündelt, und
dass zwischen der Optik (24) und der Scheibe (14) ein Kopplungsmittel (26) vorgesehen ist.

2. Sensor (50) zur Detektion von nebelartigen Medien zur Anbringung an eine Scheibe (14), insbesondere eine Windschutzscheibe eines Fahrzeuges, mit einem Sender (52) und zwei Empfängern (60, 62), wobei sich die Sendeachse (54) mit den Empfängerachsen (56, 58) an zwei unterschiedlichen Positionen (P₁, P₂) kreuzen, und mit einer Auswerteeinheit (31) die das Medium detektiert, wenn die beiden Empfänger (60, 62) vom Sender (52) ausgesendete Signale empfangen,
**dadurch gekennzeichnet, dass** der Sender (18, 20, 52), die Empfänger (22, 60, 62) und die Auswerteeinheit (31) gemeinsam auf einer Leiterplatine (16) angeordnet sind,
dass der Sensor auf der der Scheibe (14) zugewandten Seite eine Optik (24) umfasst, die die auszusendenden und zu empfangenden Signale entlang jeweils eines weitgehend zylindrischen oder linienartigen Strahles entlang der jeweiligen Sendeachse (28, 30, 54) und Empfängerachse (32, 56, 58) bündelt, und
dass zwischen der Optik (24) und der Scheibe (14) ein Kopplungsmittel (26) vorgesehen ist.

3. Sensor (10, 50) nach Anspruch 1 oder 2, **dadurch gekennzeichnet, dass** die beiden Sendeachsen (28, 30) oder die beiden Empfängerachsen (56, 58) sich nicht kreuzen und/oder wenigstens weitgehend parallel zueinander verlaufen.

4. Sensor (10, 50) nach einem der vorhergehenden Ansprüche, **dadurch gekennzeichnet, dass** die Auswerteeinheit (31) dazu geeignet ist, aufgrund eines Vergleichs der Intensität der auszusendenden Signale und der Intensität der zu empfangenden Signale die Dichte des Mediums zu bestimmen.

5. Sensor (10, 50) nach einem der vorhergehenden Ansprüche, **dadurch gekennzeichnet, dass** der wenigstens eine Sender (18, 20, 52) ein Infrarotsender und der wenigstens eine Empfänger (22, 60, 62) ein Infrarotempfänger ist.

6. Sensor (10, 50) nach einem der vorhergehenden Ansprüche, **dadurch gekennzeichnet, dass** der Sensor (10, 50) bei der Detektion von nebelartigen Medien ein Signal zur Ansteuerung eines Systems generiert.

7. Sensor (10, 50) nach einem der vorhergehenden Ansprüche, **dadurch gekennzeichnet, dass** der Sensor derart ausgebildet ist, dass der Sender (52) zeitversetzt Signale aussendet oder dass die Sender (18, 20) abwechselnd Signale aussenden.

## Claims

1. Sensor (10) for detecting fog-like media for attachment to a window pane (14), in particular a windscreen of a vehicle, having two transmitters (18, 20) and one receiver (22), the transmission axes (28, 30) crossing the receiver axis (32) at two different positions (P₁, P₂), and
having an evaluation unit (31) which detects the medium when the receiver (22) receives signals emitted by the two transmitters (18, 20), **characterized in that** the transmitters (18, 20, 52), the receiver (22, 60, 62) and the evaluation unit (31) are jointly arranged on a printed circuit board (16),
**in that** the sensor comprises, on the side facing the window pane (14), an optical system (24) which focuses the signals to be emitted and received along a respective largely cylindrical or line-like beam along the respective transmission axis (28, 30, 54) and receiver axis (32, 56, 58), and
**in that** a coupling means (26) is provided between the optical system (24) and the window pane (14).

2. Sensor (50) for detecting fog-like media for attachment to a window pane (14), in particular a windscreen of a vehicle, having one transmitter (52) and two receivers (60, 62), the transmission axis (54) crossing the receiver axes (56, 58) at two different positions (P₁, P₂), and having an evaluation unit (31) which detects the medium when the two receivers (60, 62) receive signals emitted by the transmitter (52),
**characterized in that** the transmitter (18, 20, 52), the receivers (22, 60, 62) and the evaluation unit (31) are jointly arranged on a printed circuit board (16),
**in that** the sensor comprises, on the side facing the window pane (14), an optical system (24) which focuses the signals to be emitted and received along a respective largely cylindrical or line-like beam along the respective transmission axis (28, 30, 54) and receiver axis (32, 56, 58), and
**in that** a coupling means (26) is provided between the optical system (24) and the window pane (14).

3. Sensor (10, 50) according to Claim 1 or 2, **characterized in that** the two transmission axes (28, 30) or the two receiver axes (56, 58) do not cross and/or run at least largely parallel to one another.

4. Sensor (10, 50) according to one of the preceding claims, **characterized in that** the evaluation unit (31) is suitable for determining the density of the medium on the basis of a comparison of the intensity of the signals to be emitted and the intensity of the signals to be received.

5. Sensor (10, 50) according to one of the preceding claims, **characterized in that** the at least one transmitter (18, 20, 52) is an infrared transmitter and the at least one receiver (22, 60, 62) is an infrared receiver.

6. Sensor (10, 50) according to one of the preceding claims, **characterized in that** the sensor (10, 50) generates a signal for driving a system when detecting fog-like media.

7. Sensor (10, 50) according to one of the preceding claims, **characterized in that** the sensor is designed in such a manner that the transmitter (52) emits signals with a time delay or the transmitters (18, 20) alternately emit signals.

## Revendications

1. Capteur (10) pour détecter des milieux de type brouillard destiné à être monté sur une vitre (14), notamment un pare-brise d'un véhicule, comprenant deux émetteurs (18, 20) et un récepteur (22), les axes d'émission (28, 30) croisant l'axe de réception (32) en deux points différents (P1, P2), et
comprenant une unité d'interprétation (31) qui détecte le milieu lorsque le récepteur (22) reçoit le signal émis par les deux émetteurs (18, 20),
**caractérisé en ce que** les émetteurs (18, 20, 52), les récepteurs (22, 60, 62) et l'unité d'interprétation (31) sont disposés conjointement sur un circuit imprimé (16),
que le capteur comprend sur le côté qui fait face à la vitre (14) une optique (24) qui concentre les signaux à émettre et à recevoir à chaque fois le long d'un rayon essentiellement cylindrique ou rectiligne le long de l'axe d'émission (28, 30, 54) et de l'axe de réception (32, 56, 58) respectif, et
qu'un moyen de couplage (26) est prévu entre l'optique (24) et la vitre (14).

2. Capteur (50) pour détecter des milieux de type brouillard destiné à être monté sur une vitre (14), notamment un pare-brise d'un véhicule, comprenant un émetteur (52) et deux récepteurs (60, 62), l'axe d'émission (54) croisant les axes de réception (56, 58) en deux points différents (P1, P2), et comprenant une unité d'interprétation (31) qui détecte le milieu lorsque les deux récepteurs (60, 62) reçoivent les signaux émis par l'émetteur (52),
**caractérisé en ce que** l'émetteur (18, 20, 52), les récepteurs (22, 60, 62) et l'unité d'interprétation (31) sont disposés conjointement sur un circuit imprimé (16),
que le capteur comprend sur le côté qui fait face à la vitre (14) une optique (24) qui concentre les signaux à émettre et à recevoir à chaque fois le long d'un rayon essentiellement cylindrique ou rectiligne le long de l'axe d'émission (28, 30, 54) et de l'axe de réception (32, 56, 58) respectif, et
qu'un moyen de couplage (26) est prévu entre l'optique (24) et la vitre (14).

3. Capteur (10, 50) selon la revendication 1 ou 2, **caractérisé en ce que** les deux axes d'émission (28, 30) ou les deux axes de réception (56, 58) ne se croisent pas et/ou se propagent au moins pour l'essentiel parallèlement les uns aux autres.

4. Capteur (10, 50) selon l'une des revendications précédentes, **caractérisé en ce que** l'unité d'interprétation (31) est conçue pour déterminer la densité du milieu en se basant sur une comparaison entre l'intensité des signaux à émettre et l'intensité des signaux à recevoir.

5. Capteur (10, 50) selon l'une des revendications précédentes, **caractérisé en ce que** l'au moins un émetteur (18, 20, 52) est un émetteur d'infrarouges et l'au moins un récepteur (22, 60, 62) est un récepteur d'infrarouges.

6. Capteur (10, 50) selon l'une des revendications précédentes, **caractérisé en ce que** le capteur (10, 50), lors de la détection de milieux de type brouillard, génère un signal pour commander un système.

7. Capteur (10, 50) selon l'une des revendications précédentes, **caractérisé en ce que** le capteur est configuré de telle sorte que l'émetteur (52) émet des signaux décalés dans le temps ou que les émetteurs (18, 20) émettent des signaux en alternance.
